Europäisches Patentamt

European Patent Office

Office européen des brevets

(11) Numéro de publication: **0 073 157**
**A1**

# DEMANDE DE BREVET EUROPEEN

(21) Numéro de dépôt: **82400195.2**

(22) Date de dépôt: **04.02.82**

(51) Int. Cl.³: **C 04 B 41/22**

(30) Priorité: 21.08.81 FR 8116053

(43) Date de publication de la demande:
02.03.83 Bulletin 83/9

(84) Etats contractants désignés:
AT BE CH DE GB IT LI LU NL SE

(71) Demandeur: SOCIETE POUR LE DEVELOPPEMENT DE LA RECHERCHE INDUSTRIELLE "SODRI"
82, rue Lauriston
F-75016 Paris(FR)

(72) Inventeur: Kerserho, François
16, rue Musselburgh
F-94500 Champigny(FR)

(74) Mandataire: Peuscet, Jacques
3, Square de Maubeuge
F-75009 Paris(FR)

(54) Procédé d'hydrofugation de matériaux de construction et produits destinés à la mise en oeuvre de ce procédé.

(57) L'invention concerne une procédé d'hydrofugation de matériaux de construction tels que pierres, plâtres ou briques. Dans ce procédé, on applique sur ou dans le matériau, un agent hydrofuge choisi parmi les siliconates solubles, les savons insolubles et les fluo-borates et on effectue un traitement dudit matériau à l'aide d'une solution d'au moins un polyacide sous forme d'acide libre ou partiellement salifié.

PROCEDE D'HYDROFUGATION DE MATERIAUX DE CONSTRUCTION ET PRODUITS DESTINES A LA MISE EN OEUVRE DE CE PROCEDE.

La présente invention concerne un procédé d'hydrofugation de matériaux de construction tels que les pierres, les plâtres et les briques ou d'autres matériaux de construction similaires présentant une certaine porosité ou un état de surface permettant la mise en oeuvre d'un agent hydrofuge. L'invention concerne également les produits destinés à la mise en oeuvre de ce procédé.

Cette hydrofugation est destinée notamment à mieux protéger le matériau contre la pénétration d'eau, provenant le plus souvent de la pluie battante ou de remontées d'eau du sol.

Il est bien connu d'hydrofuger des matériaux de construction, soit pendant leur fabrication, soit après leur pose, à l'aide d'agents hydrofuges qui, dans le cas de matériaux tels que les pierres, le plâtre ou la brique, sont le plus généralement des siliconates, des fluo-borates ou des savons insolubles, tels que par exemple des sels de magnésium, d'aluminium, de calcium ou d'autres métaux similaires.

L'hydrofugation à l'aide de l'agent hydrofuge préalablement dissous ou dispersé dans un solvant ou un liquide convenable, aqueux ou non, peut être faite effectivement en surface, auquel cas on badigeonne ou on asperge la surface du matériau à l'aide de l'agent hydrofuge, ou bien être faite en profondeur et, dans ce cas, on introduit l'agent hydrofuge dans la masse, ce qui est possible par exemple pour les briques, le béton, le plâtre ou les pierres reconstituées. Dans le cas de pierres naturelles ou de matériaux in situ formant par exemple des murs existants, on peut faire un traitement de surface ou injecter l'agent hydrofuge dans la masse par forçage sous pression à l'aide d'une canule introduite dans un trou d'injection convenablement pratiqué dans le matériau ; on peut encore infiltrer l'agent hydrofuge ou le faire pénétrer par imbibition et diffusion par capillarité dans le matériau.

L'expérience a montré que, malgré les précautions prises, l'hydrofugation n'est pas toujours parfaite et l'on assiste souvent à une mauvaise prise de l'agent hydrofuge ou à un mauvais accrochage conduisant à un rejet à plus ou moins long terme.

La présente invention a pour but de pallier ces inconvénients et de fournir un procédé d'hydrofugation de matériaux tels que les matériaux précités qui soit simple, facile à mettre en oeuvre, économique et qui permette d'augmenter notablement l'accrochage, la tenue et le maintien dans le temps de l'agent hydrofuge utilisé.

L'invention a donc pour objet un procédé d'hydrofugation de matériaux de construction tels que les pierres, et notamment les pierres calcaires, les plâtres et les briques dans lequel on applique sur ou dans le matériau, soit lors de la constitution de celui-ci, soit après, un agent hydrofuge, et notamment un agent hydrofuge choisi dans le groupe constitué par les siliconates solubles, les savons insolubles et les fluo-borates, caractérisé par le fait que l'on effectue un traitement du matériau à l'aide d'une solution d'un ou plusieurs polyacides ayant de préférence de deux à six fonctions acides.

Les polyacides choisis peuvent être des polyacides minéraux, tels que par exemple, les acides phosphoriques, boriques ou des polyacides organiques tels que par exemple les acides carbonique, oxalique, tartrique, citrique ou polycarboxyliques de façon générale, ou leurs sels acides.

De préférence, afin de ne pas risquer de dégrader l'agent hydrofuge mis en place sur ou dans le matériau, on utilise des hydrogéno(ou di-hydrogéno-, tri-hydrogéno- etc...) sels, c'est-à-dire des sels obtenus à partir d'acides, dont une ou plusieurs fonctions acides, mais pas toutes, auront été neutralisées par un cation convenable.

Parmi les hydrogéno-sels particulièrement préférés se trouve le bicarbonate de potasse, qui présente une efficacité particulièrement importante.

Comme autres hydrosels minéraux,on peut citer par exemple le sulfate acide de potassium $SO_4HK$, le bisulfite de sodium $SO_3HNa$, le phosphate monosodique $PO_4H_2Na$, le

phosphate dipotassique $PO_4HK_2$.

Parmi les hydrosels organiques on peut citer le bicarbonate de soude $CO_3HNa$, le citrate monosodique $C_6H_7O_7Na$, le tartrate acide de potassium $C_4H_4O_6KH$ et l'oxalate acide de potassium $C_2O_4KH$.

On peut aussi utiliser les acides sulfoniques ou les sels d'acides sulfoniques y compris l'acide lignosulfonique et les lignosulfates et les acides naphtalène disulfonique monosalifiés.

L'utilisation de tels polyacides partiellement neutralisés présente l'avantage de maintenir le pH dans le matériau à un niveau alcalin ou proche de l'alcalinité, évitant ainsi un risque d'agression de l'agent hydrofuge.

D'une façon pratique, on préfère utiliser des diacides ou des tri-acides, les diacides ayant alors avantageusement une fonction neutralisée alors que les tri-acides sont, de préférence, sous forme d'hydrogéno-sels ou de di-hydrogénosels.

Les acides libres ou les sels acides selon l'invention sont appliqués sur ou dans le matériau à hydrofuger sous forme de solutions, dans des solvants aqueux ou autres. Le solvant choisi doit être compatible avec l'agent hydrofuge dans le cas où celui-ci est présent lorsqu'on met en oeuvre la solution de polyacide. En d'autres termes, le solvant ne doit provoquer ni une dénaturation ni une extraction de l'agent hydrofuge si celui-ci est déjà en place.

Parmi les solvants aqueux, on peut citer notamment l'eau et les mélanges eau-glycérol et eau-glycol.

Dans le procédé d'hydrofugation selon l'invention, l'agent hydrofuge peut être utilisé, selon sa nature, en solution ou en dispersion dans l'eau ou un alcool tel que l'éthanol par exemple. La concentration de l'agent hydrofuge dans la solution ou la dispersion est avantageusement comprise entre 5 et 40% en poids. La quantité de solution ou de dispersion contenant l'agent hydrofuge est, de préférence, soit de 5 à 20 $1/m^2$ pour un traitement de surface (par badigeonnage ou aspersion) soit de 10 à 30 1/m linéaire pour un traitement de masse (par injection, infiltration ou imbibition).

Le procédé selon l'invention peut être mis en oeuvre en traitant la surface du matériau avec la solution contenant le ou les polyacides précités ou en l'introduisant dans le matériau soit à la fabrication, soit ultérieurement par injection, infiltration ou imbibition, après quoi on effectue la mise en place de l'agent hydrofuge de la façon usuelle. Dans ce cas, on laisse, de préférence, agir la solution de traitement contenant les polyacides avant d'appliquer l'agent hydrofuge sur ou dans le matériau pendant une durée au moins égale à 24 heures.

Cependant, dans un autre mode de mise en oeuvre, on peut, conformément à l'invention, mettre tout d'abord en place sur ou dans le matériau l'agent hydrofuge et, après mise en place de celui-ci, soit immédiatement, soit après un certain temps, on applique la solution de polyacide sur le matériau ou on l'introduit dans celui-ci.

Dans un troisième mode de mise en oeuvre, on peut appliquer simultanément l'agent hydrofuge et la solution contenant le (ou les) polyacide(s) sur ou dans le matériau, l'application pouvant être effectuée soit séparément, soit à l'aide d'un mélange contenant à la fois l'agent hydrofuge et la solution contenant le (ou les) polyacide(s).

Dans le cas où l'on utilise comme agent hydrofuge des siliconates en solution dans l'eau, on constate que le traitement conformément au procédé selon l'invention permet, en quelque sorte, de réaliser ou de favoriser la "prise" et la "cure", en d'autres termes, la polymérisation et la réticulation du siliconate utilisé.

Cependant, une action favorable est également constatée, même dans le cas d'agents hydrofuges qui ne sont pas polymérisables, cette action favorable s'expliquant probablement par le fait que le traitement selon l'invention favorise l'accrochage de l'agent hydrofuge sur le support, qui lui est offert par le matériau.

Bien entendu, le polyacide doit être choisi de façon à ne pas être incompatible avec le bon fonctionnement de l'hydrofuge et de ne pas gêner éventuellement sa réticulation.

De préférence, on utilise une solution assez concentrée du (ou des) polyacide(s) dans le milieu de dissolution, de façon à pouvoir mettre en place la quantité voulue de polyacide sans incorporer trop de solvant, notamment d'eau, dans le matériau. Cependant, il est préférable que la concentration soit suffisamment inférieure à la saturation, afin d'éviter des risques de cristallisation. En d'autres termes, une bonne dissémination homogène, avec la quantité voulue de polyacide, est recherchée.

De façon générale, on préfère que la quantité de solution de polyacide, par exemple à mi-saturation, soit de 2 à 10 $1/m^2$ de matériau traité, dans le cas d'un traitement de surface par badigeonnage ou aspersion, soit de 5 à 20 1 au mètre linéaire de mur traité dans le cas d'un traitement de masse par injection, infiltration ou imbibition.

La quantité et la nature du matériau hydrofuge sont, bien entendu, adaptées aux matériaux à hydrofuger et choisies de façon à maintenir une certaine porosité permettant une circulation d'air et une évaporation progressive ou un reflux de la solution contenant le (ou les) polyacide(s).

La solution doit être suffisamment fluide et on peut ajouter, si besoin est, des agents fluidisants, comme par exemple, de l'urée, afin d'obtenir le degré de viscosité souhaité, qui est, de préférence, analogue à celui de l'agent hydrofuge lui-même.

Les radicaux des polyacides, par exemple les di-acides ou tri-acides mis en oeuvre, doivent présenter un certain nombre de qualités :

- ils ne doivent pas, après le traitement, laisser en place un sel permanent ayant un caractère déliquescent ou hygroscopique, car ceci contrarierait l'action de l'agent hydrofuge ;

- ils doivent être, comme cela a été vu, solubles en quantité suffisante, pour que l'on ne soit pas obligé d'utiliser des volumes de solution trop importantes ;

- la solution doit, de préférence, être stable dans le temps, sans risque d'oxydation, d'hydrolyse ou de dégradation rapide ;

   - le prix de revient doit être, de préférence, en rapport avec celui généralement admis pour un traitement hydrofugeant.

   L'invention a également pour objet les produits permettant le traitement selon le procédé de l'invention, lesdits produits étant caractérisés par le fait qu'ils comportent en solution dans un milieu convenable, une quantité suffisante d'un ou plusieurs polyacides ayant, de préférence, de deux à six fonctions acides, ces polyacides étant de préférence, comme cela a été vu, partiellement neutralisés par des cations convenables formant, avec le radical acide, des sels non déliquescents ou hygroscopiques.

   Les polyacides (ou leurs sels acides) peuvent notamment être des acides minéraux, comme les acides phosphorique ou borique, ou des acides organiques comme les acides oxalique, tartrique, citrique et autres acides polycarboxyliques ; mais, de préférence, on utilise l'acide carbonique, notamment sous forme de bicarbonate de potassium.

   De préférence, la concentration de la solution est telle qu'elle soit importante tout en étant suffisamment inférieure à la saturation. De façon avantageuse, une concentration au voisinage de la mi-saturation peut être utilisée.

   Les solvants utilisés sont, de préférence, de l'eau ou des milieux aqueux tels qu'eau-glycol ou eau-glycérol.

   Si nécessaire, la solution peut recevoir un agent fluide destiné à lui donner le degré de viscosité souhaité.

   D'autres avantages et caractéristiques de l'invention apparaîtront à la lecture de la description suivante, faite à titre d'exemples non limitatifs.

   Le procédé d'hydrofugation illustré par les exemples 1 à 7 suivants peut consister en un traitement dans la masse par injection, infiltration ou imbibition ou en un traitement de surface par badigeonnage ou aspersion.

## EXEMPLE 1

   On imprègne un matériau constitué par une pierre calcaire ou un mur de pierres calcaires à l'aide d'une solution alcaline de siliconate de potassium à une concentration

de 200g/l. Immédiatement après cette imprégnation, on traite le matériau à l'aide d'une solution aqueuse de bicarbonate de potasse à une concentration de 220g/l. Il se produit une réticulation du siliconate hydrofuge.

On peut aussi contrôler le degré de réticulation en variant la quantité utilisée de l'hydrogéno-sel par exemple en amorçant simplement la réticulation à l'aide d'une faible quantité d'hydrogéno-sel par l'action des ions $H^+$ libres, ou au contraire, en imbibant le matériau jusqu'à saturation de l'alcalinité.

## EXEMPLE 2

On imprègne une tuile du commerce à l'aide d'une solution de silane-éthyl dans un alcool à une concentration de 25g/l. Au bout d'un certain temps, après cette imprégnation, on traite le matériau à l'aide d'une solution aqueuse de bicarbonate de potasse à une concentration de 125g/l.

## EXEMPLE 3

On imprègne un matériau constitué par une pierre calcaire ou un mur de pierres calcaires à l'aide d'une solution alcaline de siliconate de sodium à une concentration de 75g/l. Après l'imprégnation, on traite le matériau à l'aide d'une solution aqueuse de phosphate monosodique à une concentration de 70g/l. Le traitement aboutit à une réticulation du siliconate hydrofuge.

## EXEMPLE 4

On prépare un mortier de type usuel en adjoignant aux constituants du mortier une quantité habituelle de stéarate de calcium. Après la prise du mortier, on traite le matériau à l'aide d'une solution de phosphate monosodique à une concentration de 50g/l contenant également un agent tensio-actif.

## EXEMPLE 5

On imprègne du grès à l'aide d'une solution de silane-ethyl. Après une durée de 1 à 48 heures, on pulvérise à la surface ou on introduit dans le grès une solution de citrate monosodique à une concentration de 130g/l.

## EXEMPLE 6

On réalise, d'une façon usuelle, des briques contenant du siliconate de potasse comme agent hydrofuge.

On applique une solution de succinate monosodique à une concentration de 80g/1.

### EXEMPLE 7

On imprègne une pierre calcaire, pour l'hydrofuger, à l'aide d'une solution de silane-méthyl.

On applique une solution de potassium hydrogéno-oxalate à une concentration de 80g/1.

Le procédé d'hydrofugation illustré par les exemples 8 à 11 suivants, consiste en un traitement de surface du matériau par badigeonnage ou aspersion.

### EXEMPLE 8

On imprègne un matériau constitué en béton à l'aide d'une suspension de stéarate d'aluminium dans de l'eau à une concentration de 100g/1.

Après cette imprégnation, on pulvérise sur le matériau une solution aqueuse de bicarbonate de potasse à une concentration de 100g/1 ayant préalablement reçue une adjonction d'un agent tensio-actif tel que nonylphénol poly-oxyéthyléné.

### EXEMPLE 9

On imprègne un crépi par pulvérisation à l'aide d'une solution de silane-méthyl. Après imprégnation, on imbibe le crépi par pulvérisation à l'aide d'une solution aqueuse de phosphate monosodique.

### EXEMPLE 10

On réalise un ciment de type usuel que l'on protège ensuite par une hydrofugation au siliconate de sodium. On applique sur le ciment dur hydrofugé une solution de sulfate acide de potassium à une concentration de 100g/1.

### EXEMPLE 11

On hydrofuge un béton à l'aide de stéarate de calcium. On effectue sur le béton ainsi hydrofugé une application par pulvérisation de la solution de sulfate acide de potassium de l'exemple 10.

## REVENDICATIONS

1 - Procédé d'hydrofugation de matériaux de construction tels que les pierres, notamment les pierres calcaires, les plâtres et les briques, dans lequel on applique sur ou dans le matériau, soit lors de la constitution de celui-ci, soit après, un agent hydrofuge, et notamment un agent hydrofuge choisi dans le groupe formé par les siliconates solubles, les savons insolubles et les fluo-borates, caractérisé par le fait que l'on effectue, en outre, un traitement dudit matériau à l'aide d'une solution d'au moins un polyacide, sous forme d'acide libre ou partiellement salifié.

2 - Procédé selon la revendication 1, caractérisé par le fait que l'on utilise un polyacide ayant de deux à six fonctions acides et notamment un polyacide choisi dans le groupe formé par les acides phosphorique, borique, carbonique, oxalique, tartrique, succinique, citrique et polycarboxyliques.

3 - Procédé selon l'une des revendications 1 et 2, caractérisé par le fait que l'on utilise le polyacide sous forme d'un hydrogéno-sel, dans lequel une ou plusieurs des fonctions acides, mais pas toutes, ont été neutralisées par un cation convenable.

4 - Procédé selon la revendication 3, caractérisé par le fait que l'on utilise comme cation, le potassium ou le sodium.

5 - Procédé selon la revendication 4, caractérisé par le fait que l'on utilise du bicarbonate de potassium ou de sodium.

6 - Procédé selon l'une des revendications 1 à 5, caractérisé par le fait que l'on traite le matériau avec la solution de polyacide, en surface ou dans la masse, avant l'application de l'agent hydrofuge.

7 - Procédé selon l'une des revendications 1 à 5, caractérisé par le fait que l'on effectue le traitement du matériau avec la solution de polyacide en même temps que l'on applique l'agent hydrofuge.

8 - Procédé selon l'une des revendications 1 à 5, caractérisé par le fait que l'on effectue le traitement du matériau avec la solution de polyacide après l'application de l'agent hydrofuge.

9 - Procédé selon l'une des revendications 1 à 8, caractérisé par le fait que l'on utilise une solution de polyacide proche de la mi-saturation.

10 - Procédé selon la revendication 9, caractérisé par le fait que l'on utilise la solution de polyacide en une quantité comprise soit entre 2 et 10 $1/m^2$ de matériau dans le cas d'un traitement de surface, soit entre 5 et 20 litres au mètre linéaire de mur traité dans le cas d'un traitement de masse.

11 - Procédé selon l'une des revendications 1 à 10, caractérisé par le fait que la solution ou la dispersion contenant l'agent hydrofuge est utilisée en une quantité comprise soit entre 5 et 20 $1/m^2$ de matériau dans le cas d'un traitement de surface, soit entre 10 et 30 litres au mètre linéaire de mur traité dans le cas d'un traitement dans la masse.

12 - Procédé selon l'une des revendications 1 à 11, caractérisé par le fait que l'on ajoute un agent fluidisant tel que l'urée dans la solution de polyacide.

13 - Produit pour la mise en oeuvre du procédé selon l'une des revendications 1 à 12, caractérisé par le fait qu'il comporte, en solution dans le milieu convenable, une quantité suffisante d'un ou plusieurs polyacides.

14 - Produit selon la revendication 13, caractérisé par le fait que le polyacide possède de 2 à 6 fonctions acides et qu'il est choisi dans le groupe constitué par les acides phosphorique, borique, oxalique, tartrique, citrique, carbonique et carboxyliques.

15 - Produit selon la revendication 14, caractérisé par le fait qu'une au moins des fonctions acides du polyacide mais pas toutes, est neutralisée par un cation approprié.

16 - Produit selon la revendication 15, caractérisé par le fait que le (ou les) polyacide(s) sont dissous dans un solvant convenable à une concentration proche de la mi-saturation.

17 - Produit selon l'une des revendications 13 à 16, caractérisé par le fait qu'il contient du bicarbonate de potassium ou de sodium.

Office européen
des brevets

**RAPPORT DE RECHERCHE EUROPEENNE**

**0073157**
Numéro de la demande

EP 82 40 0195

| Catégorie | Citation du document avec indication; en cas de besoin, des parties pertinentes | Revendication concernée | CLASSEMENT DE LA DEMANDE (Int. Cl. 3) |
|-----------|-------------------------------------------------------------------------------|-------------------------|--------------------------------------|
| X,Y | FR - A - 2 190 770 (WACKER CHEMIE GmbH)<br><br>* revendications 1-4; exemples * | 1-9,<br>13-17 | C 04 B 41/22 |
| | -- | | |
| Y | DE - A - 2 112 302 (PENNWALD CORP.)<br><br>* revendications 1-2; exemple 9 * | 1,2 | |

----------------

**DOMAINES TECHNIQUES RECHERCHES (Int. Cl. 3)**

C 04 B 41/

**DOCUMENTS CONSIDERES COMME PERTINENTS**

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|----------------------|-----------------------------------|-------------|
| La Haye | 01-04-1982 | STANGE |

OEB Form 1503.1  06.78